# DEMANDE DE BREVET EUROPEEN

(11) **EP 0 705 758 A1**
(43) Date de publication de la demande: **10.04.1996**
(21) Numéro de dépôt: 95402151.5
(22) Date de dépôt: 26.09.1995
(51) Int. Cl.: B64C 25/34, B64C 25/10

(54) **Train d'atterrissage d'aéronef, du type à relevage latéral**

(30) Priorité: 04.10.1994 FR 9411843
(71) Demandeur: MESSIER-DOWTY S.A., F-78140 Velizy Villacoublay (FR)
(72) Inventeur: Derrien, Michel, F-78000 Versailles (FR); Chauvet, Dominique, F-92320 Chatillon (FR)
(74) Mandataire: Jaunez, Xavier

(57) **Abrégé**

L'invention concerne un train d'atterrissage d'aéronef comportant deux jambes indépendantes (110, 210) décalées axialement entre elles, dont les axes de pivotement sont décalés l'un par rapport à l'autre. Chaque jambe est formée d'un caisson rigide, d'un balancier articulé en extrémité du caisson, d'une poutre équipée de deux roues disposées l'une derrière l'autre, et d'un amortisseur de liaison articulé sur le balancier. En position train bas, les deux balanciers (113, 213) avec leur poutre associée (115, 215) s'étendent dans deux plans distincts parallèles au plan longitudinal médian de l'aéronef, les deux poutres étant axialement rapprochées l'une de l'autre, par exemple de façon que la roue arrière de la jambe avant soit accolée à la roue avant de la jambe arrière, et en position train haut les deux balanciers (113, 213) s'étendent dans un même plan horizontal, les deux poutres étant en outre axialement éloignées l'une de l'autre, pour un carénage de compacité optimale.

## Description

L'invention concerne les trains d'atterrissage d'aéronef, du type à relevage latéral.

On connaît de nombreux trains d'atterrissage à relevage latéral comportant une ou plusieurs jambes articulées sur une structure d'aéronef et équipées inférieurement d'un train de roues, avec un ou plusieurs vérins de manoeuvre qui assurent le pivotement de ces jambes autour de leur axe.

Le document US-A-4,406,432 illustre ainsi un train à plusieurs jambes indépendantes relevables latéralement, équipées chacune de deux roues en diabolo montées en bout de la tige télescopique qui coulisse dans le caisson d'amortisseur. Cette disposition est contraignante au regard des cadres de la structure d'aéronef, et elle est dans la pratique limitée au cas de jambes à deux roues en diabolo, car la présence d'une poutre ou balancier en extrémité de la tige coulissante compliquerait considérablement l'implantation.

Certains inconvénients ont été surmontés en prévoyant une jambe de train comportant un balancier porteur de deux roues en diabolo et qui est directement relié à un moyen de commande de pivotement agencé pour diminuer, lors du relevage du train, l'angle formé par la direction du caisson et la direction du balancier, et inversement pour augmenter cet angle lors de la descente du train, en se conformant à une trajectoire prédéterminée (voir par exemple le document FR-A-2.702.732 de la demanderesse).

Dans le cas d'avions du type gros porteur, on peut alors utiliser plusieurs jambes de ce type à relevage latéral, mais en sachant toutefois que l'augmentation du nombre de jambes affecte d'autant la manoeuvrabilité de l'avion lors du roulage sur piste et accroît notablement l'usure des pneumatiques.

Toutefois, une telle disposition implique un carénage latéral de dimensionnement important, ce qui a un effet non négligeable sur la traînée de l'avion aux vitesses élevées. La présence des roues en diabolo oblige également à prévoir un logement de hauteur suffisante pour recevoir le train après relevage complet de celui-ci.

On a déjà proposé dans les années soixante des solutions visant à diminuer l'encombrement du carénage, mais ces solutions sont complexes et ne conviennent que pour des jambes relevables à une seule roue.

Le document FR-A-1.521.322 décrit ainsi un train d'atterrissage à relevage latéral comportant une structure triangulaire s'étendant transversalement, articulée sur la structure d'avion, et sur laquelle sont montées à pivotement deux jambes à une roue. Grâce à cette disposition, lorsque le train est relevé, une roue est logée en partie basse du carénage, et l'autre latéralement, ce qui permet d'avoir un carénage relativement compact.

On peut également citer le document FR-A-1.535.045, qui décrit un train d'atterrissage à relevage latéral comportant trois balanciers mono-roue articulés sur une structure unitaire à deux bras, laquelle structure ne ressemble d'ailleurs pas à une jambe à caisson rigide. En position train bas, les trois roues du train sont disposées dans deux plans parallèles voisins (avec la roue avant et la roue arrière dans le plan extérieur, et la roue centrale dans le plan intérieur), pour former un groupe compact. Pour éviter d'avoir un logement de réception de hauteur excessive, il est prévu, avant de relever le train, d'avancer la roue avant et la roue centrale en faisant pivoter leur balancier respectif, de façon à pouvoir rapprocher les trois roues d'un plan horizontal commun en position train haut.

Cette approche, particulière à un train à trois roues, a cependant l'inconvénient d'induire un encombrement important du logement dans le sens longitudinal. De plus, la structure utilisée est complexe, car le relevage de la roue centrale et le relevage individuel des roues avant et arrière doivent être assurés par des moyens séparés. Enfin, les attaches sur la structure d'avion sont relativement éloignées du fuselage.

L'état de la technique peut être enfin complété en citant le document US-A-5,000,400 qui décrit un train d'atterrissage dont les jambes indépendantes sont juxtaposées latéralement, avec de chaque côté une jambe intérieure à relevage vertical et une jambe extérieure à relevage latéral.

L'invention vise précisément à concevoir un train d'atterrissage plus performant ne présentant pas les inconvénients et/ou limitations précités.

L'invention a ainsi pour objet de réaliser un train d'atterrissage à relevage latéral multi-jambes dont les jambes peuvent être équipées de plusieurs roues, tout en préservant au maximum la compacité du carénage.

L'invention a également pour objet de réaliser un train d'atterrissage dont les roues présentent une disposition optimale au regard de la manoeuvrabilité de l'avion lors du roulage sur piste.

Il s'agit plus particulièrement d'un train d'atterrissage d'aéronef, du type à relevage latéral, caractérisé en ce qu'il comporte deux jambes indépendantes décalées entre elles selon la direction de l'axe central de l'aéronef et montées pour pivoter sur une structure d'avion autour de leur axe respectif au moyen d'un vérin de manoeuvre associé à chaque jambe, les axes de pivotement de ces deux jambes étant tous deux sensiblement parallèles au plan longitudinal médian de l'aéronef mais décalés l'un par rapport à l'autre, chacune desdites jambes étant formée d'un caisson rigide articulé sur la structure d'aéronef, d'un balancier articulé en extrémité du caisson, d'une poutre articulée en extrémité du balancier et équipée de roues disposées l'une derrière l'autre, et d'un amortisseur de liaison articulé sur le balancier, ces deux jambes étant agencées de façon qu'en position train bas, les deux balanciers avec leur poutre associée s'étendent dans deux plans distincts parallèles au plan longitudinal médian de l'aéronef et les deux poutres soient axialement rapprochées l'une de l'autre, et qu'en position train haut, les deux balanciers avec leur poutre associée s'étendent dans un même plan sensiblement perpendiculaire audit plan longitudinal médian et les deux poutres soient axialement éloignées l'une de l'autre.

Selon un mode d'exécution particulier, l'axe de pivotement de la jambe qui est en avant est décalé vers l'intérieur et vers le bas par rapport à l'axe de pivotement de la jambe qui est en arrière.

De préférence, les amortisseurs sont agencés pour produire respectivement, lors du relevage du train, un allongement de jambe avec une avancée de la poutre correspondante pour la jambe qui est en avant, et un raccourcissement de jambe avec un recul de la poutre correspondante pour la jambe qui est en arrière. En particulier, l'amortisseur de la jambe avant est articulé par un cardan à la structure d'avion, tandis que l'amortisseur de la jambe arrière est articulé à un levier lui-même articulé sur le caisson correspondant et dont la rotation est commandée par une bielle associée articulée sur la structure d'avion.

On pourra prévoir que les deux caissons sont dimensionnés de façon que l'axe d'articulation de leur balancier soit à une même hauteur en position train bas, et les balanciers avec leur poutre associée sont identiques pour les deux jambes, ces deux balanciers étant essentiellement parallèles en position train bas.

Il est en outre avantageux que chaque jambe soit équipée d'un élément positionneur reliant un appendice du caisson de cette jambe à sa poutre porteuse de roues, en formant un parallélogramme articulé tendant à maintenir sensiblement constante la direction axiale de cette poutre. En particulier, chacun des éléments positionneurs est constitué par une bielle télescopique formant barre directrice lors du relevage ou de la descente du train, et formant amortisseur de tangage lors du roulage.

Selon un mode d'exécution particulier, chacune des deux jambes est équipée de deux roues disposées en tandem.

De préférence alors, les deux jambes sont agencées de telle façon qu'en position train bas, la roue arrière de la jambe qui est en avant et la roue avant de la jambe qui est en arrière soient sensiblement positionnées longitudinalement au même niveau.

D'autres caractéristiques et avantages de l'invention apparaîtront plus clairement à la lumière de la description qui va suivre et des dessins annexés, concernant un mode de réalisation particulier, en référence aux figures où :
- les figures 1 et 2 illustrent en vue latérale un train d'atterrissage conforme à l'invention, en position train bas, respectivement tout détendu et sous charge statique ;
- la figure 3 illustre le même train en vue frontale, toujours en position train bas (la position des roues en position train haut est schématisée en traits mixtes) ;
- les figures 4 et 5 illustrent ce même train en position train haut, respectivement en vue de dessus et en vue frontale.

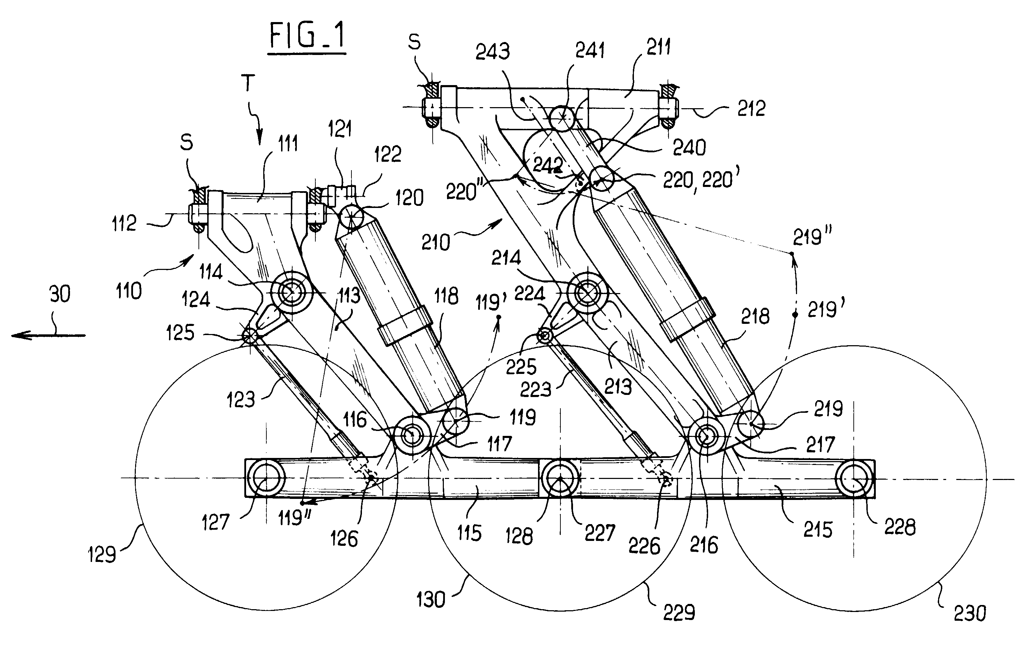

On va maintenant décrire, en se référant aux figures 1 à 5, un train d'atterrissage T conforme à l'invention, ledit train étant du type à relevage latéral, en étant reçu dans un logement associé L de la structure d'aéronef concernée, ledit logement pouvant être délimité par deux cadres transversaux C espacés entre eux d'une distance correspondant sensiblement à l'encombrement global des roues de ce train d'atterrissage en position train haut.

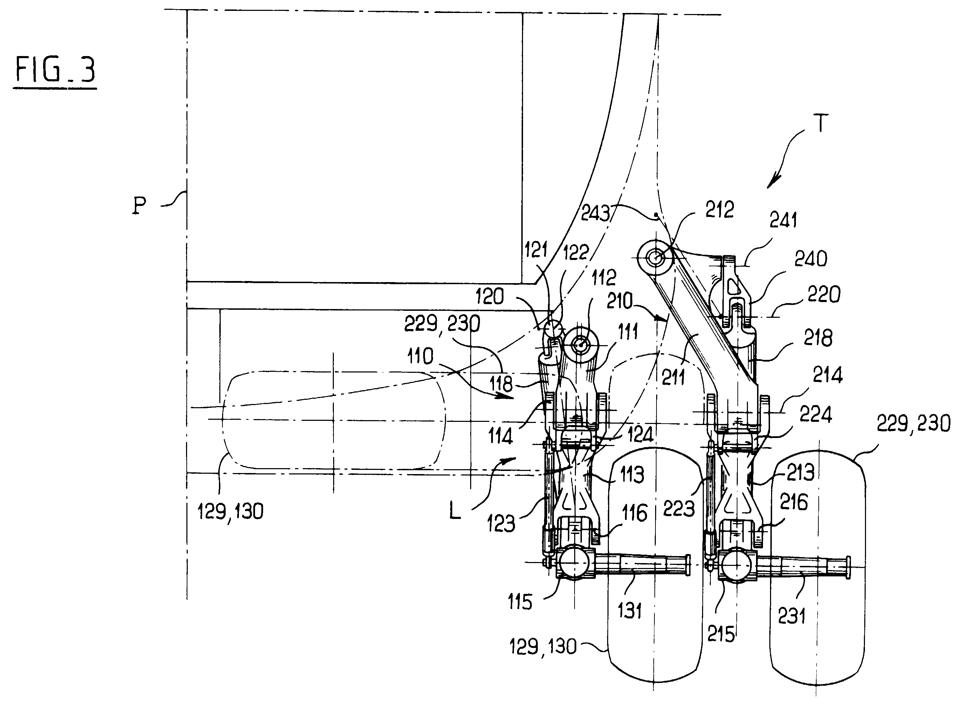

Le train d'atterrissage T comporte deux jambes indépendantes, qui sont décalées entre elles selon la direction de l'axe central de l'aéronef. On pourra ainsi parler d'une jambe avant 110 et d'une jambe arrière 210, en référence à la direction d'avancement notée 30 de l'aéronef. Chacune des deux jambes 110 et 210 est montée pour pivoter sur une structure d'aéronef S, autour d'un axe respectif 112 et 212, au moyen d'un vérin de manoeuvre respectif associé (non représenté ici). Ainsi que cela est mieux visible sur la vue frontale de la figure 3, les axes 112 et 212 des jambes indépendantes 110, 210 sont tous deux sensiblement parallèles au plan longitudinal médian de l'aéronef (plan noté P sur la figure 3), mais décalés l'un par rapport à l'autre. En l'espèce, l'axe de pivotement 112 de la jambe avant 110 est décalé vers l'intérieur et vers le bas par rapport à l'axe de pivotement 212 de la jambe arrière 210.

La première jambe 110, ou jambe avant, est formée d'un caisson rigide 111 articulé sur la structure d'aéronef autour d'un axe 112 parallèle à l'axe central de l'aéronef, d'un balancier 113 articulé en 114 en extrémité du caisson 111, d'une poutre 115 articulée en 116 en extrémité du balancier 113, cette poutre étant équipée de roues disposées l'une derrière l'autre. En l'espèce, on a illustré un mode d'exécution dans lequel la poutre 115 est équipée de deux roues disposées en tandem 129, 130, roues dont les axes sont notés 127, 128 respectivement (et les essieux 131 sur la figure 3). Il est en outre prévu un amortisseur 118 qui est articulé en 119 sur un appendice 117 ménagé en extrémité du balancier 113.

On retrouve de la même façon pour la jambe arrière 210, un caisson rigide 211 articulé sur la structure d'aéronef autour d'un axe 212, un balancier 213 articulé en 214 en extrémité du caisson rigide 211, une poutre 215 articulée en extrémité du balancier 213 et équipée de deux roues disposées en tandem 229, 230. Il est de même prévu un amortisseur 218 articulé en 219 sur un appendice 217 ménagé en extrémité du balancier 213.

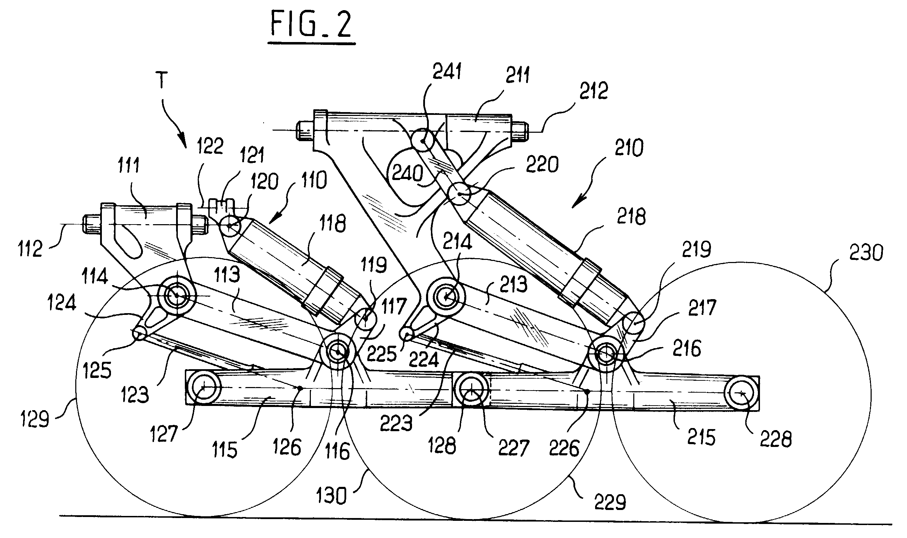

Ainsi que cela est mieux visible sur la figure 3, lorsque le train d'atterrissage T est en position train bas, les deux balanciers 113, 213, avec leur poutre associée 115, 215 s'étendent dans deux plans distincts parallèles au plan longitudinal médian P de l'aéronef. En outre, dans cette position train bas, les deux poutres 115 et 215 sont axialement rapprochées l'une de l'autre, ainsi que cela est mieux visible sur les figures 1 et 2. Ce rapprochement des poutres permet d'avoir un ensemble de roulement plus court, ce qui favorise la manoeuvrabilité de l'avion lors du roulage sur piste. De préférence, ainsi que cela a été illustré ici, l'agencement des deux jambes 110, 210 est tel qu'en position train bas, la roue arrière 130 de la jambe avant 110 et la roue avant 229 de la jambe arrière 210 sont sensiblement positionnées longitudinalement au même niveau, c'est-à-dire que leurs essieux sont sensiblement coaxiaux. On dispose ainsi de la pleine capacité de support de la charge statique sur les quatre pneus du train d'atterrissage en position train bas, tout en ayant une longueur réduite pour cet ensemble de roulement afin de favoriser les manoeuvres en virage lors du roulement sur piste.

Ainsi que cela est aisé à comprendre, il n'est pas souhaitable de pouvoir relever les deux jambes indépendantes 110, 210 dans la position qu'occupent ces jambes en position train bas : en effet, on aurait alors un encombrement en hauteur qui serait excessif, en étant même supérieur à celui de paires de roues en diabolo, ce qui induirait un carénage important. On a vu plus haut que l'un des buts de l'invention était précisément d'obtenir un carénage compact, de sorte que le train d'atterrissage selon l'invention est en outre équipé de moyens permettant de modifier la géométrie de l'une et/ou de l'autre des deux jambes 110, 210 lors du relevage du train, de telle façon que l'on puisse arriver à une position train haut dans laquelle toutes les roues sont dans un même plan horizontal, de sorte que l'encombrement en hauteur du logement associé correspond alors à celui d'une seule roue. On va décrire ci-après un tel agencement particulier qui constitue une caractéristique importante de l'invention, selon laquelle, en position train haut, les deux balanciers avec leur poutre associée s'étendent dans un même plan sensiblement perpendiculaire au plan longitudinal médian de l'aéronef, et les deux poutres sont en outre axialement éloignées l'une de l'autre.

Si l'on veut parvenir à disposer les quatre roues du train d'atterrissage dans un même plan commun, il convient d'éloigner les deux poutres 115, 215 l'une de l'autre dans une mesure suffisante pour que leurs roues respectives puissent précisément être amenées dans ce plan commun.

En l'espèce, on a prévu d'agir simultanément sur chacune des deux jambes, grâce à des moyens associés à l'accrochage de l'amortisseur de chacune de ces jambes.

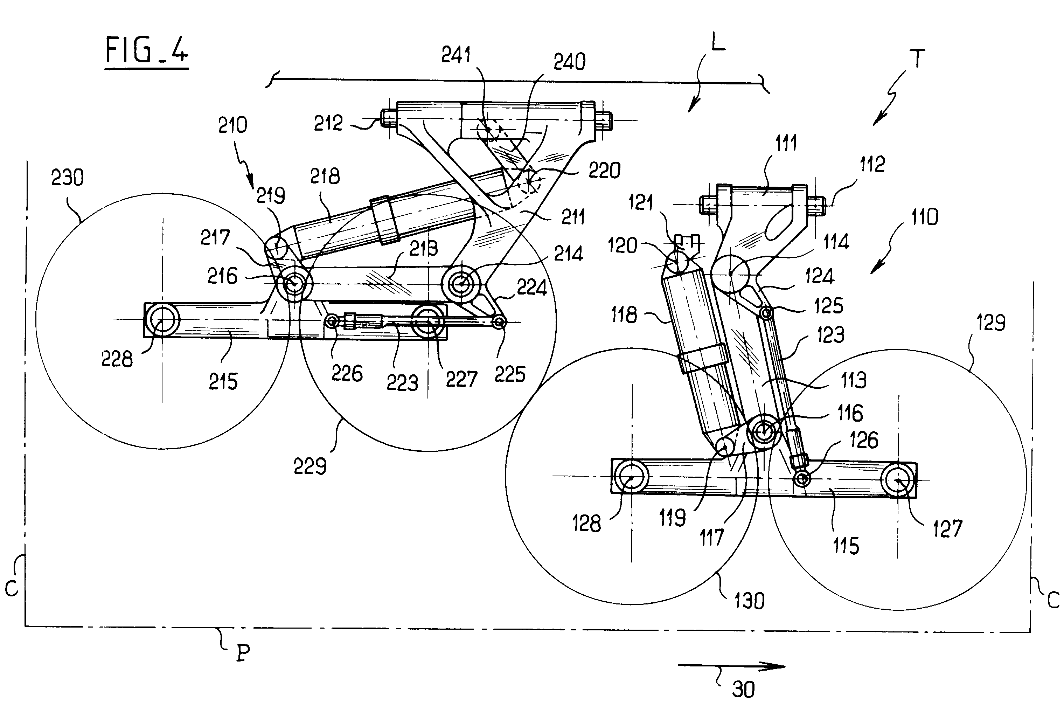

Pour la jambe avant 110, l'amortisseur 118 est agencé pour produire, lors du relevage du train, un allongement de jambe avec une avancée de la poutre 115. A cet effet, on a prévu un accrochage en partie haute de l'amortisseur 118, selon un axe 120 qui est perpendiculaire (en position train bas) au plan longitudinal médian de l'aéronef, sur une noix de cardan 121 montée pour pivoter sur la structure d'aéronef S autour d'un axe 122 parallèle à l'axe central de l'aéronef. Compte tenu du décalage à la fois en hauteur et latéral, entre les deux axes 112 et 122, il se produit, lors du relevage de la jambe avant 110, un pivotement du balancier 113 vers l'avant, duquel il résulte un allongement de jambe (c'est-à-dire un accroissement de la distance entre les axes orthogonaux 112 et 116), avec en même temps une avancée de la poutre 115 et des deux roues 129, 130 qu'elle porte. Lors du relevage du train, l'amortisseur 118 part d'une position tout détendu avant le début du pivotement de la jambe 110 autour de son axe 112, de sorte que cet amortisseur agit comme une barre directrice déterminant avec précision le mouvement de pivotement du balancier 113. On a également prévu, pour la jambe avant 110, un élément positionneur 123 reliant un appendice 124 du caisson 111 à un point intermédiaire 126 de la poutre 115 porteuse de roues. L'élément positionneur 123 est ainsi articulé en 125 sur l'appendice 124, et en 126 sur la poutre 115. De préférence, cet élément positionneur sera réalisé sous la forme d'une bielle télescopique qui forme barre directrice en étant verrouillée hydrauliquement (par la pression hydraulique de la génération de l'aéronef) lors du relevage ou de la descente du train, et qui constitue un amortisseur de tangage lors du roulage (le fluide hydraulique étant alors seulement relié au système de pressurisation de l'aéronef). L'agencement de cet élément positionneur 123 sera de préférence tel qu'il définisse un parallélogramme articulé pour les points 114, 125, 126, 116, ce parallélogramme tendant à maintenir sensiblement constante la direction axiale de la poutre 115. Ainsi, dans toutes les positions angulaires de la jambe autour de son axe 112, la poutre 115 tend à conserver son orientation, c'est-à-dire reste parallèle à l'axe central de l'aéronef. Dans la position train haut illustrée sur la figure 4, on trouve alors la position d'allongement de jambe maximum et d'avancée maximale des deux roues correspondantes 129, 130.

Pour ce qui est de la jambe arrière 210, on a prévu un accrochage de l'amortisseur 218 de celle-ci qui soit tel que l'on obtienne, lors du relevage de cette jambe 210, un raccourcissement de jambe et un recul de la poutre 215 correspondante.

L'amortisseur 218 de la jambe arrière 210 est ainsi articulé (en partie haute) en 220 sur un levier 240 lui-même articulé en 241 sur le caisson 211 de la jambe, levier dont la rotation est commandée par une bielle associée 243, qui est articulée par une extrémité sur la structure d'avion, et à son autre extrémité sur un appendice 242 du levier 240. Lors du relevage de la jambe 210, la bielle 243 induit un pivotement du levier 240 vers l'avant, et donc un déplacement correspondant du point d'accrochage 220 de l'amortisseur 218. Il en découle un raccourcissement de la jambe ainsi qu'un recul des deux roues 229, 230 portées par la poutre 215. Le dimensionnement des organes précités doit être choisi tel que le recul de la poutre 215 soit suffisant pour que la roue avant 229 de la jambe arrière 210 puisse venir, en position train haut, au voisinage direct de la roue arrière 130 de la jambe avant 110. Par ailleurs, comme pour la jambe avant 110, il est prévu sur la jambe arrière 210 un élément positionneur 223 articulé en 225 sur un appendice 224 du caisson 211, et à son autre extrémité en 226 sur la poutre 215, lequel élément positionneur forme un parallélogramme articulé tendant à maintenir sensiblement constante la direction axiale de la poutre 215.

On pourra éventuellement prévoir que les deux caissons 111 et 211 sont dimensionnés de telle façon que l'axe d'articulation 114, 214 de leur balancier soit à une même hauteur en position train bas. Un tel agencement est mieux visible sur les figures 1 et 2, et il permet d'avoir des balanciers 113, 213 avec leur poutre associée 115, 215 réalisées avec des organes exactement identiques, ainsi que les éléments positionneurs correspondants 123, 223. On observera que les deux balanciers 113, 213 sont essentiellement parallèles en position train bas, de sorte que les quatre axes 114, 116, 216, 214 forment également un parallélogramme articulé.

Sur la figure 1, on a également porté la position des points d'articulation 119, 219 et 220 en position sous charge statique (points notés 119', 219', 220') et en position train haut (points notés 119", 219", 220"), et on a figuré en traits mixtes la trajectoire des points 119, 219, 220 précités.

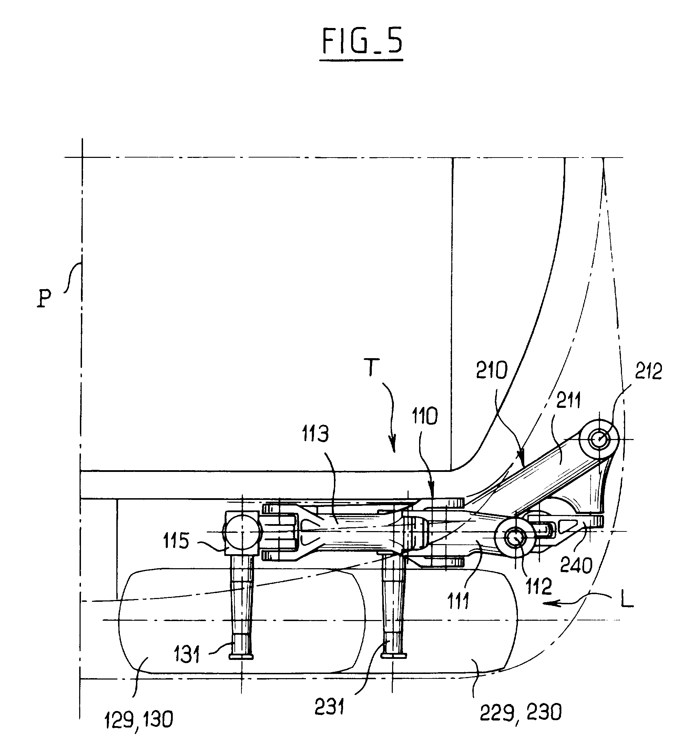

Les figures 1 et 2 montrent bien qu'en position train bas, la roue arrière 130 de la jambe avant 110 et la roue avant 229 de la jambe arrière 210 sont sensiblement positionnées longitudinalement au même niveau, alors qu'en position train haut (figures 4 et 5) on retrouve les quatre roues 129, 130, 229, 230 disposées dans un même plan horizontal, en ne nécessitant ainsi qu'un logement de dimensionnement minimal, de sorte que l'on obtient un carénage extrêmement compact tant latéralement qu'en hauteur.

Ainsi que cela a été dit plus haut, chaque jambe indépendante 110, 210 est équipée de son propre vérin de manoeuvre. De la même façon, chacune de ces jambes comportera ses propres éléments de contreventement, lesquels n'ont pas été représentés ici pour ne pas charger les figures.

Pour le relevage de chacune des deux jambes indépendantes 110, 210, on pourra procéder sous forme d'une séquence, en relevant d'abord la jambe avant 110, puis la jambe arrière 210. On pourra en variante prévoir une liaison mécanique en torsion entre les caissons des deux jambes : il convient toutefois d'observer que cette liaison en torsion ne constituerait qu'une dépendance de trajectoire seulement, étant entendu que les deux vérins de manoeuvre agissent encore chacun de leur côté, les deux mouvements étant ainsi liés aux déformations près.

D'autres aménagements de détails seront également envisageables pour le train d'atterrissage qui vient d'être décrit, sans sortir du cadre de l'invention.

Ainsi, par exemple, on pourra prévoir une possibilité de pivotement latéral de l'un ou l'autre des essieux 131, 231 des roues, en particulier de l'essieu de la roue arrière 130 de la jambe avant 110, afin de faciliter le montage ou le démontage de cette roue devant laquelle se trouve la roue avant 229 de la jambe arrière 210. On pourra également prévoir la possibilité de ménager une articulation autour d'un axe vertical dans la partie arrière de la poutre 215 de la jambe arrière 210, de façon à pouvoir obtenir un débattement latéral de la portion d'extrémité de cette poutre, et ainsi faire tourner la roue arrière 230 de cette jambe arrière pour améliorer la manoeuvrabilité de l'avion en virage lors de son roulage sur piste. Les aménagements précités n'ont pas été illustrés sur les figures, pour plus de clarté mais ils sont à la portée de l'homme de l'art.

On est ainsi parvenu à réaliser un train d'atterrissage à relevage latéral multi-jambes dont les jambes indépendantes peuvent être individuellement équipées de plusieurs roues, tout en préservant au maximum la compacité du carénage de l'aéronef.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Train d'atterrissage d'aéronef, du type à relevage latéral, caractérisé en ce qu'il comporte deux jambes indépendantes (110 ; 210) décalées entre elles selon la direction de l'axe central de l'aéronef et montées pour pivoter sur une structure d'avion autour de leur axe respectif (112 212) au moyen d'un vérin de manoeuvre associé à chaque jambe, les axes de pivotement de ces deux jambes étant tous deux sensiblement parallèles au plan longitudinal médian de l'aéronef mais décalés l'un par rapport à l'autre, chacune desdites jambes étant formée d'un caisson rigide (111 ; 211) articulé sur la structure d'aéronef, d'un balancier (113 ; 213) articulé en extrémité du caisson, d'une poutre (115 ; 215) articulée en extrémité du balancier et équipée de roues disposées l'une derrière l'autre, et d'un amortisseur de liaison (118 ; 218) articulé sur le balancier, ces deux jambes étant agencées de façon qu'en position train bas, les deux balanciers avec leur poutre associée s'étendent dans deux plans distincts parallèles au plan longitudinal médian de l'aéronef et les deux poutres soient axialement rapprochées l'une de l'autre, et qu'en position train haut, les deux balanciers avec leur poutre associée s'étendent dans un même plan sensiblement perpendiculaire audit plan longitudinal médian et les deux poutres soient axialement éloignées l'une de l'autre.

2. Train d'atterrissage selon la revendication 1, caractérisé en ce que l'axe de pivotement (112) de la jambe (110) qui est en avant est décalé vers l'intérieur et vers le bas par rapport à l'axe de pivotement (212) de la jambe (210) qui est en arrière.

3. Train d'atterrissage selon la revendication 1 ou la revendication 2, caractérisé en ce que les amortisseurs (118 ; 218) sont agencés pour produire respectivement, lors du relevage du train, un allongement de jambe avec une avancée de la poutre (115) correspondante pour la jambe (110) qui est en avant, et un raccourcissement de jambe avec un recul de la poutre (215) correspondante pour la jambe (210) qui est en arrière.

4. Train d'atterrissage selon la revendication 3, caractérisé en ce que l'amortisseur (118) de la jambe avant (110) est articulé par un cardan (121) à la structure d'avion, tandis que l'amortisseur (218) de la jambe arrière (210) est articulé à un levier (240) lui-même articulé sur le caisson correspondant (211) et dont la rotation est commandée par une bielle associée (243) articulée sur la structure d'avion.

5. Train d'atterrissage selon l'une des revendications 1 à 4, caractérisé en ce que les deux caissons (111; 211) sont dimensionnés de façon que l'axe d'articulation de leur balancier soit à une même hauteur en position train bas, et les balanciers avec leur poutre associée sont identiques pour les deux jambes (110 ; 210).

6. Train d'atterrissage selon la revendication 5, caractérisé en ce que les deux balanciers (113 ; 223) sont essentiellement parallèles en position train bas.

7. Train d'atterrissage selon l'une des revendications 1 à 6, caractérisé en ce que chaque jambe (110 ; 210) est équipée d'un élément positionneur (123 ; 223) reliant un appendice (124 ; 224) du caisson de cette jambe à sa poutre (115 ; 215) porteuse de roues, en formant un parallélogramme articulé tendant à maintenir sensiblement constante la direction axiale de cette poutre.

8. Train d'atterrissage selon la revendication 7, caractérisé en ce que chacun des éléments positionneurs (123 ; 223) est constitué par une bielle télescopique formant barre directrice lors du relevage ou de la descente du train, et formant amortisseur de tangage lors du roulage.

9. Train d'atterrissage selon l'une des revendications 1 à 8, caractérisé en ce que chacune des deux jambes (110 ; 210) est équipée de deux roues disposées en tandem (129, 130 ; 229, 230).

10. Train d'atterrissage selon la revendication 9, caractérisé en ce que les deux jambes (110 ; 210) sont agencées de telle façon qu'en position train bas, la roue arrière (130) de la jambe (110) qui est en avant et la roue avant (229) de la jambe (210) qui est en arrière soient sensiblement positionnées longitudinalement au même niveau.
